# EUROPEAN PATENT SPECIFICATION

(11) **EP 2 868 541 B1**
(45) Date of publication and mention of the grant of the patent: **28.09.2016**
(21) Application number: 13191059.8
(22) Date of filing: 31.10.2013
(51) Int. Cl.: B60T 3/00

(54) **A device for restraining a ground engaging means for an agricultural machine or a work machine**
Vorrichtung zum Rückhalten eines Bodeneingreifelements für eine landwirtschaftliche Maschine oder eine Arbeitsmaschine
Dispositif de retenue d'un support de contact avec le sol pour une machine agricole ou une machine de travail

(43) Date of publication of application: 06.05.2015
(73) Proprietor: Deere & Company, Moline, IL 61265 (US)
(72) Inventor: Schibel, Achim, 69123 Heidelberg (DE); Schacht, Thomas, 67598 Gundersheim (DE)
(74) Representative: John Deere GmbH & Co. KG

(56) References cited:
- DE-B- 1 002 642
- FR-A- 1 585 850
- FR-A5- 2 052 227
- GB-A- 2 178 121
- US-A- 3 973 651
- US-A- 5 465 814

## Description

The invention relates to a device for restraining a ground engaging means of an agricultural machine or work machine comprising a base member engageable with the ground, a support member with its one end connected to an end of the base member and a resilient member.

Various forms of restraint systems are proposed in the prior art, the primary intent of which is to prevent the free movement of vehicles along a terrain. Even on a moderately sloped terrain there is a tendency for the vehicles to gain momentum and move down the slope although they are in parking condition but with the gear in neutral and no park brake. Restraint systems range from simple wooden blocks with triangular cross-section as demonstrated in US3720406 A to complicated devices having linkages and trunnions as disclosed in the patent publication US 8365875 BB.

JPH04118342 A teaches the use of a restraining device having a pair of wedge shaped locking blocks with metallic chains, rings and locks. This arrangement although is simple in design, yet is not convenient to use. Besides, it poses challenges in terms of packaging and transporting when the device is not in use. Due to the presence of metallic elements like chains and locks that are loosely held this device generates undesirable noises especially when they are carried on a moving machine. The conditions worsen and cause discomfort to the operator as the machine moves along an off-highway where the terrain is undulated.

US 3973651 A describes a vehicle chock. The arrangement though is compact in design, yet is not convenient to use and carry on the machine as there are loose parts that are bound to knock against each other and cause undesirable noise and discomfort to the operator of the The documents FR1585850A, DE1002642B, FR2052227A5 and US5465814A, describe other types of foldable wheel chocks, none of which fold up automatically.

Accordingly, the objective of this invention is to provide a restraining device that effectively restrains the ground engaging means for an agricultural machine or work machine, easily adaptable, simple in design, and easy to use.

These and other objectives are achieved by a resilient member connected to a free end of the base member and a free end of the support member in that the device assumes the restraining disposition by means of a retractable force induced on the resilient member while moving the device to the non-restraining disposition.

The device can be advantageously used for restraining the ground engaging means for an agricultural machine or work machine without the use of an external force. The device can be adaptable to various sizes of ground engaging means. The device is easy to manufacture and use due to its simple design. The device can be easily packed and carried on the vehicle without the problem of rattling noise as there are no loosely held elements.

In accordance with the present invention, there is provided a device for restraining a ground engaging means of an agricultural machine or a work machine. The ground engaging means can be a wheel, track or any other suitable member that remains in contact with the ground and moves the vehicle forward. The agricultural machine can be a farm tractor, self-propelled agricultural harvester, agricultural mower etc. The work machine can be a loader, excavator, backhoe loader, skid-steer loader etc. Accordingly, the restraining device can assume distinct dispositions. One is the restraining disposition and the other is the non-restraining disposition. When the device assumes a restraining disposition it is suitable for restraining the ground engaging means of the machine. In a non-restraining disposition the device is folded in order to be packaged into a receiving container or space.

The device for restraining a ground engaging means comprises at least a base member, a support member and a resilient member with each of them having two ends. The base member serves as a platform upon which the device stands when the device is in restraining disposition. The support member acts as a bulwark allowing the resilient member to rest against it when the device assumes a restraining disposition.

One end of the base member is movably connected to one end of the support member. The other two ends of the base member and the support member are free ends. The base member and the support member can be connected in a pivoting, hinged or clamshell arrangement so as to move against each other about an axis.

The two ends of the resilient member can be removably or fixedly connected to the free ends of the base member and the support member. The resilient member also has at least a linear fold at convenient locations on its surface normal to its length. It is advantageous to have a resilient member that is retractable or in other words an ability to spring back. The resilient member can be of spring steel, urethane, hardened and tempered mild steel or carbon steel etc.

When the device is in the restraining disposition, the base member, the support member and the resilient member are acutely angled to one another with the ends connected thereby creating a near triangular configuration. The device can be made to assume a non-restraining disposition by moving the base member and the support member towards each other by the use of a force. This action will induce force on the resilient member and bends it inwardly along its length about the at least one linear fold. The device is said to have assumed a non-restraining disposition after the free ends of the base member and the support member come in close contact with the folded resilient member interposed in between. The device can be locked in a given position using a locking means after it assumes a non-restraining disposition so as to be able to package and carry it. The locking means can be a pin or a shaft attached to a biasing means and passing through at least an aperture. It is also possible to lock the device in a non-restraining position using other possible means for locking like a hook and eye or bolt and nut etc.

The force induced while making the device assume a non-restraining disposition will be stored in the resilient member as a retractable force. The retractable force stored in the resilient member moves the device to the restraining position without the use of any external force when it is unlocked as the resilient member unfolds outwardly.

In the following, an embodiment of the invention is described in more detail using the drawings. It is shown in:
- Fig. 1: ground engaging means of an agricultural machine or work machine restrained by a device according to the invention
- Fig. 2: front view of a device for restraining the ground engaging means
- Fig. 2a: rear view of a device for restraining the ground engaging means
- Fig. 2b: exploded view of a device for restraining the ground engaging means
- Fig. 3: a device in restraining disposition
- Fig. 3a: a device in non-restraining disposition

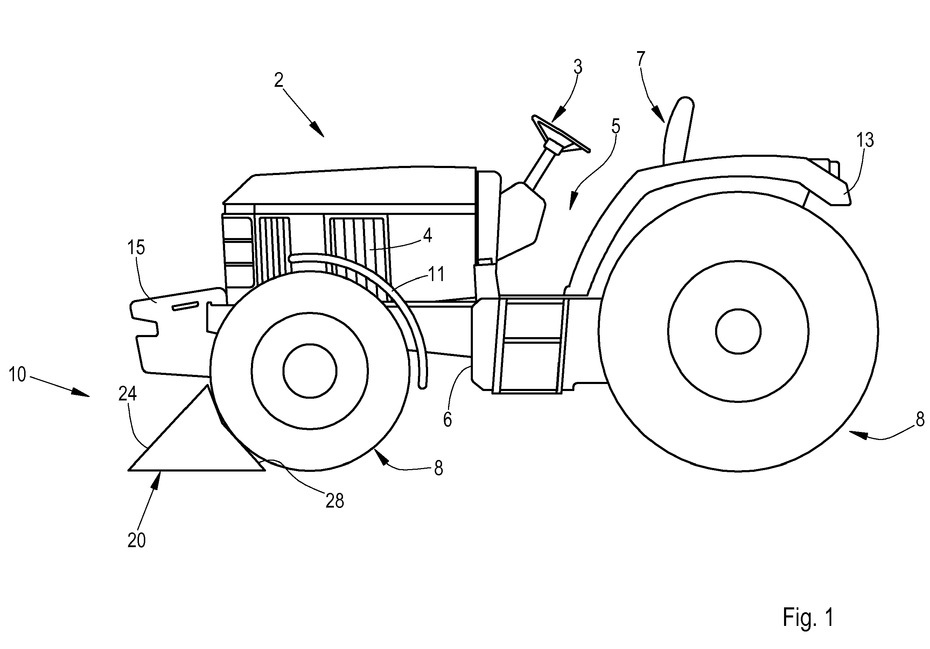

Figure 1 shows an agricultural tractor 2 having a chassis 6, operator platform 5 and ground engaging means 8.

The agricultural tractor 2 as shown in figure 1 is used on the farm to mechanize various agricultural operations. It acts as a source of power for carrying or moving several types of implements, equipments and tools that are essential for performing operations on the farm. The chassis 6 comprises a front portion carrying stabilizing weights 15, an engine compartment 4 and front fenders 11, a middle portion having a drive train and front axle (not shown) and an end portion having rear axles (not shown) and rear fenders 13. The operator platform 5 provides for seating arrangement 7 and steering control means 3 besides housing other useful elements like instrument cluster, speed control devices, gear engagement means etc. which are not shown in the drawings for the sake of simplicity. Ground engaging means 8 in this case is a set of wheels that moves the tractor 2 forward. A device for restraining the ground engaging means 8 is indicated by numeral 10. The device 10 comprises a base member 20, a support member 24 and a resilient member 28.

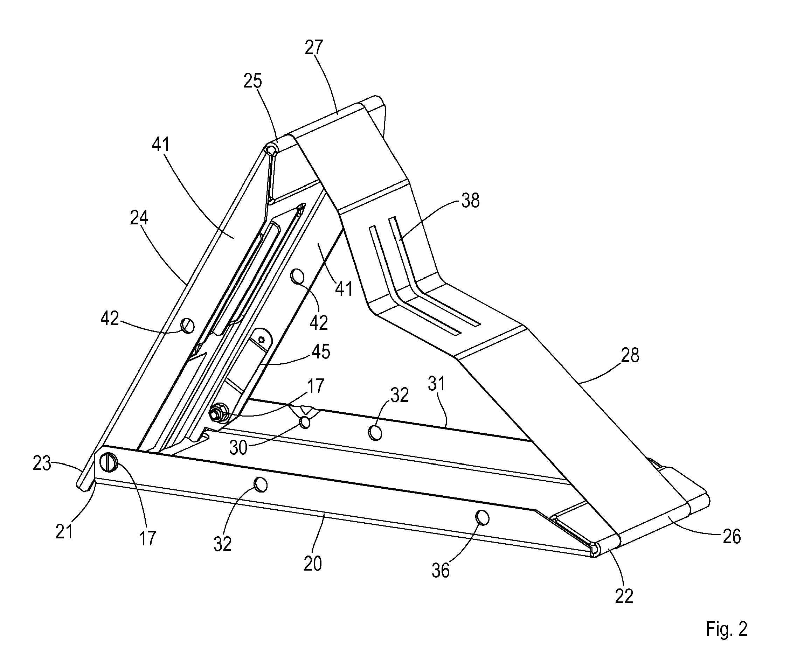

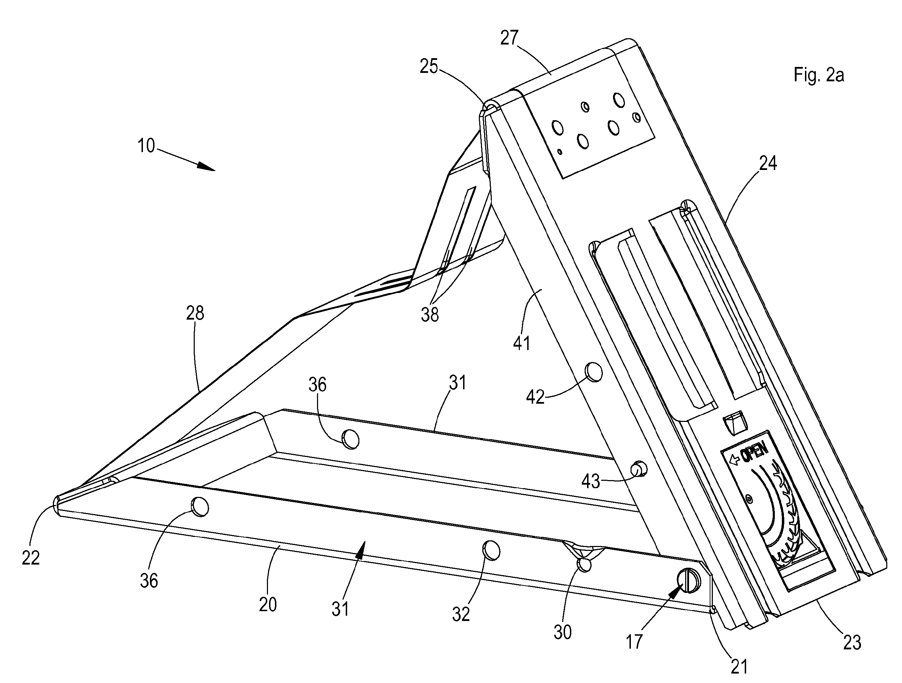

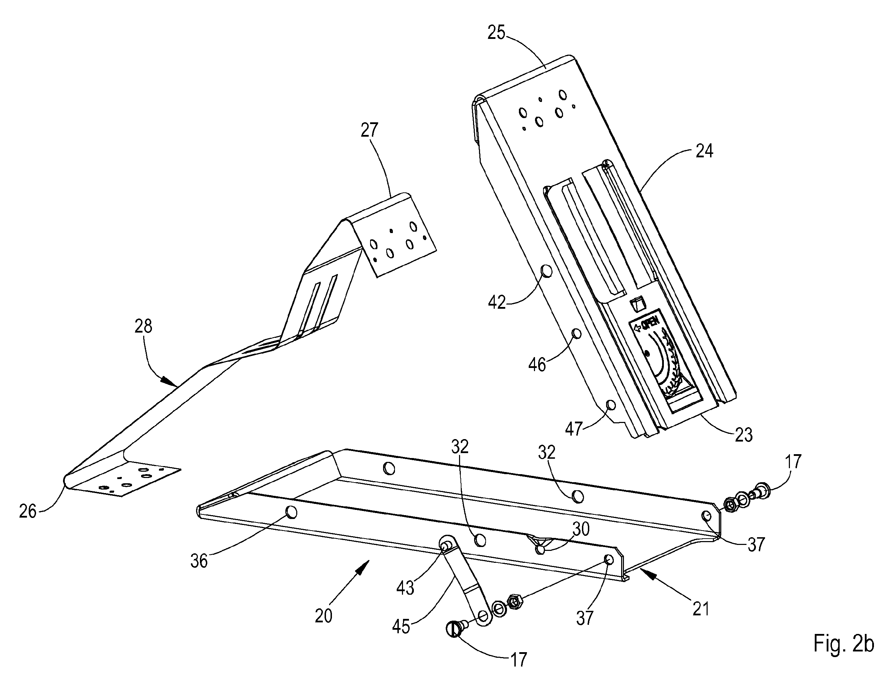

Figures 2A, 2B & 2C show a device 10 for restraining the ground engaging means 8. The base member 20 has two ends 21 and 22. The base member 20 has a pair of side walls 31. Apertures 32 are provided on the side walls 31 of the base member 20.

The support member 24 of the device 10 has two ends 23 and 25. The support member 24 has a pair of side walls 41. Apertures 42 are provided on the side walls 41 of the support member 24. The resilient member 28 has two ends 26 and 27. The resilient member 28 has a plurality of slots 38. The resilient member 28 has at least one linear fold on its surface indicated in figure 2A using a broken line.

The side walls 31 of the base member 20 are located on the two extreme sides and extend along the length of the base member 20. The outer side (not shown) of the base member 20 is in direct contact with the ground surface. The apertures 32 on the side walls 31 are coaxially positioned. Another aperture 30 is provided on one of the side walls 31 at a convenient location. The side walls 31 have apertures 37 to an end which forms one end 21 of the base member 20. The other end 22 is the free end of the base member 20.

The side walls 41 of the support member 24 are located on the two extreme sides and extend along the length of the support member 24. The apertures 42 on the side walls 41 are coaxially positioned. The side walls 41 have apertures 47 to an end which forms one end 23 of the support member 24. The other end 25 is the free end of the support member 24.

The end 21 of the base member 20 is movably connected to the end 23 of the support member 24 by means of a pin or shaft or any suitable fastener 17 passing through the apertures 37 and 47 thereby creating a pivoting movement about an axis between the base member 20 and the support member 24.

The ends 26 and 27 of the resilient member 28 are removably or fixedly attached to the end 22 of the base member 20 and to the end 25 of the support member 24 respectively. The slots 38 extend along the length of the resilient member 28. Linear folds indicated by parallel lines in figure 2A are provided at a convenient location on the surface of the resilient member 28 normal to its length.

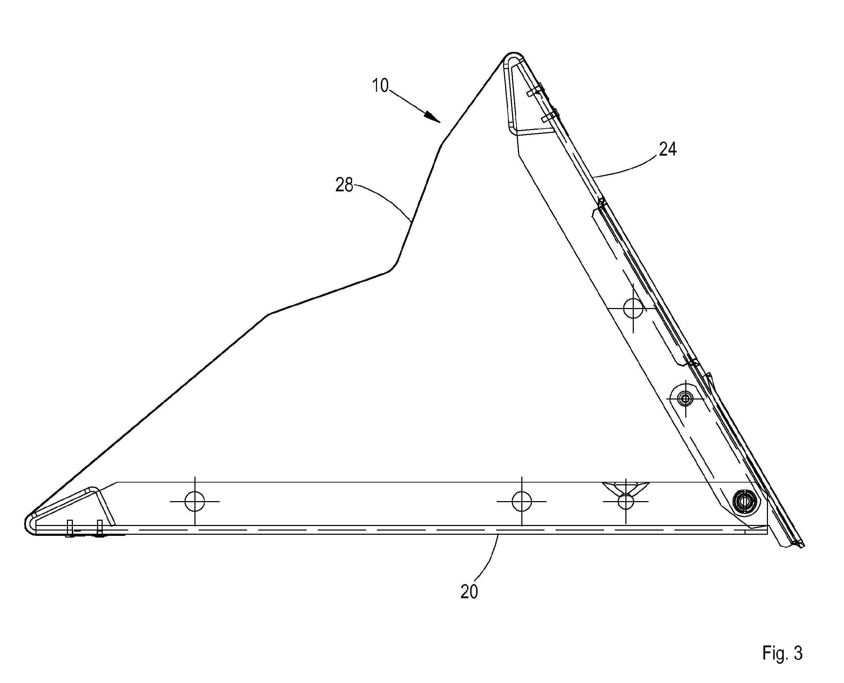

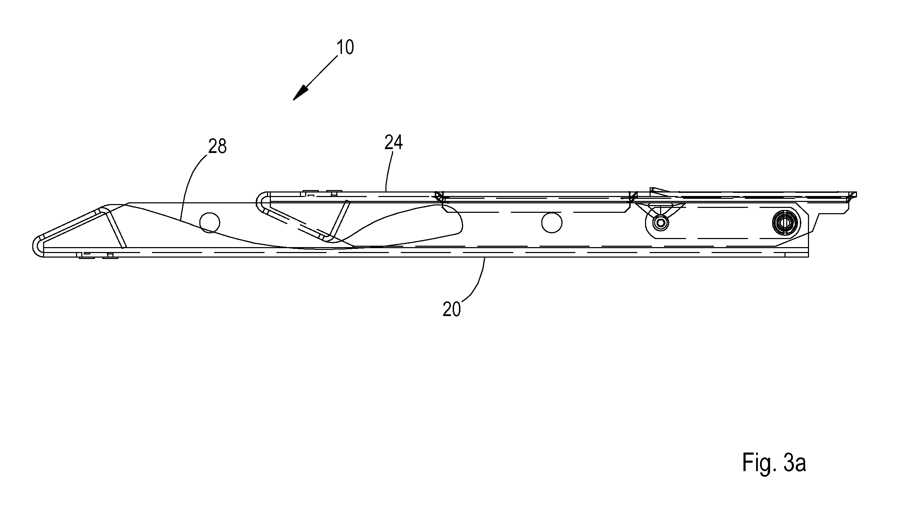

Now referring to figures 3A and 3B, the device 10 can assume two distinct dispositions like the restraining disposition A and non-restraining disposition B. When the device assumes a restraining disposition A, it is suitable for restraining the ground engaging means 8 of the machine 2. In a non-restraining disposition B, the device 10 is folded and packed into a receiving container or space.

As is evident from the foregoing description of the invention and with reference to figures 1, 2A, 2B, 2C, 3A and 3B the base member 20 serves as a platform upon which the device 10 stands when the device 10 assumes a restraining disposition A. The support member 24 acts as a bulwark allowing the resilient member 28 to rest against it when the device 10 assumes a restraining disposition A. When device 10 is in the restraining disposition A the base member 20, the support member 24 and the resilient member 28 are acutely angled to one another with the ends 21-23, 22-26, 25-27 connected to each other thereby creating a near triangular configuration. The device 10 can be made to assume a non-restraining disposition B by moving the base member 20 and the support member 24 towards each other by the use of force. This action will induce force on the resilient member 28 and bends it inwardly length wise along the linear folds indicated by the parallel lines as shown in figure 2A. The device 10 is said to have assumed a non-restraining disposition B after the free ends 25 and 22 of the base member 20 and support member 24 respectively come in close contact and with the folded resilient member 28 interposed in between them. In the non-restraining disposition B, the side walls 41 of the support member 24 offsets with the side walls 31 of the base member 20 respectively. As a result of this offsetting, the apertures 32-42 on the side walls 31-41 of base member 20 and support member 24 respectively are coaxial. The device 10 can be locked in a given position using a locking means after it assumes a non-restraining disposition B so as to be able to package and carry the device 10. The locking means can be a pin or a shaft 43 attached to a biasing means 45 and passing through the apertures 46 and 30. Alternatively, it is also possible to lock the device 10 in a non-restraining position B using other possible means for locking like a hook and eye or bolt and nut etc. Apertures 32-42 and/or 36 are used for holding the device 10 on the machine by allowing the pins or shafts (not shown) to pass through them. The force induced while making the device 10 assume a non-restraining disposition B will be stored in the resilient member 28 as a retractable force. The retractable force stored in the resilient member 28 moves the device 10 to the restraining position A without the use of any external force when it is unlocked as the resilient member 28 unfolds outwardly.

## Claims

1. A device (10) for restraining a ground engaging means of an agricultural machine or a work machine having a restraining disposition (A) and a non-restraining disposition (B); the device (10) comprising at least a base member (20) engageable with the ground, a support member (24) with its one end (23) movably connected to one end (21) of the base member (20) and a resilient member (28) **characterized in that** the resilient member (28) is connected to a free end (22) of the base member (20) and a free end (25) of the support member (24) in that the device (10) assumes the restraining disposition (A) by means of a retractable force induced on the resilient member (28) while moving the device (10) to the non-restraining disposition (B).

2. A device (10) according to claim 1, characterized with the one end (21) of the base member (20) and the one end (23) of the support member (24) movably connected by means of a pivot or a hinge.

3. A device (10) according to one or more of the preceding claims, **characterized in that** the device (10) assumes a restraining disposition by the retraction of the resilient member (28) with the resilient member (28) unfolding outwardly relative to the base member (20) and the support member (24).

4. A device (10) according to one or more of the preceding claims, **characterized in that** the device (10) assumes a non-restraining disposition (B) by the compression of the resilient member (28) with the resilient member (28) folding inwardly relative to the base member (20) and the support member (24).

5. A device (10) according to one or more of the preceding claims, **characterized by** a means (32) for locking the base member (20) and the support member (24) in a position when the device (10) assumes a non-restraining disposition.

6. A device (10) according to one or more of the preceding claims, **characterized in that** the resilient member (28) is a spring steel sheet.

## Patentansprüche

1. Vorrichtung (10) zum Rückhalten eines Bodeneingriffsmittels einer landwirtschaftlichen Maschine oder einer Arbeitsmaschine mit einer Rückhalteanordnung (A) und einer Nichtrückhalteanordnung (B); wobei die Vorrichtung (10) mindestens ein mit dem Boden in Eingriff bringbares Basisglied (20), ein Stützglied (24), dessen eines Ende (23) mit einem Ende (21) des Basisglieds (20) beweglich verbunden ist, und ein elastisches Glied (28) umfasst, **dadurch gekennzeichnet, dass** das elastische Glied (28) mit einem freien Ende (22) des Basisglieds (20) und einem freien Ende (25) des Stützglieds (24) verbunden ist, dass die Vorrichtung (10) durch eine während des Bewegens der Vorrichtung (10) in die Nichtrückhalteanordnung (B) an dem elastischen Glied (28) erzeugte Rückstellkraft die Rückhalteanordnung (A) einnimmt.

2. Vorrichtung (10) nach Anspruch 1, **dadurch gekennzeichnet, dass** das eine Ende (21) des Basisglieds (20) und das eine Ende (23) des Stützglieds (24) durch einen Drehzapfen oder ein Scharnier beweglich verbunden sind.

3. Vorrichtung (10) nach einem oder mehreren der vorhergehenden Ansprüche, **dadurch gekennzeichnet, dass** die Vorrichtung (10) durch die Rückstellung des elastischen Glieds (28), wobei sich das elastische Glied (28) bezüglich des Basisglieds (20) und des Stützglieds (24) nach außen entfaltet, eine Rückhalteanordnung einnimmt.

4. Vorrichtung (10) nach einem oder mehreren der vorhergehenden Ansprüche, **dadurch gekennzeichnet, dass** die Vorrichtung (10) durch das Zusammendrücken des elastischen Glieds (28), wobei das elastische Glied (28) bezüglich des Basisglieds (20) und des Stützglieds (24) nach innen klappt, eine Nichtrückhalteanordnung (B) einnimmt.

5. Vorrichtung (10) nach einem oder mehreren der vorhergehenden Ansprüche, **gekennzeichnet durch** ein Mittel (32) zum Verriegeln des Basisglieds (20) und des Stützglieds (24) in einer Stellung, wenn die Vorrichtung (10) eine Nichtrückhalteanordnung einnimmt.

6. Vorrichtung (10) nach einem oder mehreren der vorhergehenden Ansprüche, **dadurch gekennzeichnet, dass** es sich bei dem elastischen Glied (28) um ein Federstahlblech handelt.

## Revendications

1. Dispositif (10) servant à retenir un moyen de contact avec le sol d'un engin agricole ou d'un engin de travaux présentant une disposition de retenue (A) et une disposition de non-retenue (B) ; le dispositif (10) comprenant au moins un élément de base (20) pouvant être mis en contact avec le sol, un élément de support (24) dont une extrémité (23) est raccordée de manière mobile à une extrémité (21) de l'élément de base (20) et un élément élastique (28), **caractérisé en ce que** l'élément élastique (28) est raccordé à une extrémité libre (22) de l'élément de base (20) et à une extrémité libre (25) de l'élément de support (24), **en ce que** le dispositif (10) adopte la disposition de retenue (A) par le biais d'une force de rétraction produite sur l'élément élastique (28) lors du déplacement du dispositif (10) vers la disposition de non-retenue (B).

2. Dispositif (10) selon la revendication 1, **caractérisé en ce que** ladite extrémité (21) de l'élément de base (20) et ladite extrémité (23) de l'élément de support (24) sont raccordées de manière mobile par le biais d'un pivot ou d'une charnière.

3. Dispositif (10) selon une ou plusieurs des revendications précédentes, **caractérisé en ce que** le dispositif (10) adopte une disposition de retenue par rétraction de l'élément élastique (28), l'élément élastique (28) se dépliant vers l'extérieur par rapport à l'élément de base (20) et à l'élément de support (24).

4. Dispositif (10) selon une ou plusieurs des revendications précédentes, **caractérisé en ce que** le dispositif (10) adopte une disposition de non-retenue (B) par compression de l'élément élastique (28), l'élément élastique (28) se pliant vers l'intérieur par rapport à l'élément de base (20) et à l'élément de support (24).

5. Dispositif (10) selon une ou plusieurs des revendications précédentes, **caractérisé par** un moyen (32) servant à bloquer l'élément de base (20) et l'élément de support (24) dans une position lorsque le dispositif (10) adopte une disposition de non-retenue.

6. Dispositif (10) selon une ou plusieurs des revendications précédentes, **caractérisé en ce que** l'élément élastique (28) est une tôle en acier à ressorts.
